# EUROPÄISCHE PATENTSCHRIFT

(11) **EP 2 601 496 B1**
(45) Veröffentlichungstag und Bekanntmachung des Hinweises auf die Patenterteilung: **20.09.2017**
(21) Anmeldenummer: 11748323.0
(22) Anmeldetag: 27.07.2011
(51) Int. Cl.: G01L 7/16

(54) **OPTISCHE DRUCKANZEIGEEINRICHTUNG**
OPTICAL PRESSURE INDICATION DEVICE
DISPOSITIF OPTIQUE INDICATEUR DE PRESSION

(30) Priorität: 05.08.2010 DE 102010033499
(43) Veröffentlichungstag der Anmeldung: 12.06.2013
(73) Patentinhaber: KNORR-BREMSE Systeme für Schienenfahrzeuge GmbH, 80809 München (DE)
(72) Erfinder: KÖNIGSBAUER, Fritz, 81377 München (DE); WURZLBAUER, Thomas, 80935 München (DE); WIEDMANN, Götz, 80797 München (DE); OCSKÓ, Gábor, H-1048 Budapest (HU)
(74) Vertreter: Schönmann, Kurt
(86) Internationale Anmeldenummer: PCT/EP2011/062882
(87) Internationale Veröffentlichungsnummer: WO 2012/016892

(56) Entgegenhaltungen:
- WO-A1-2005/036039
- DE-A1- 2 358 612
- DE-A1- 4 005 897
- DE-B- 1 294 046
- GB-A- 801 951
- US-A- 4 766 759
- US-A1- 2010 037 961

## Beschreibung

Die Erfindung betrifft eine optische Druckanzeigeeinrichtung mit einem mechanisch entlang eines Anzeigeweges bewegbaren Zeiger, der nach Maßgabe eines über einen Druckanschluss anliegenden Steuerdrucks p zur Absolutdruckanzeige derart verstellbar ist, dass eine langsame Druckänderung einen zumindest abschnittsweise zügigen Stellungswechsel des Zeigers herbeiführt.

Das Einsatzgebiet der Erfindung erstreckt sich vornehmlich auf die Schienenfahrzeugtechnik. Durch geltende Vorschriften ist es erforderlich, dass der in einem pneumatischen Bremssystem herrschende Vorratsluftdruck durch eine äußere am Schienenfahrzeug, beispielsweise eines Wagens, sichtbare optische Druckanzeige ablesbar ist, um festzustellen, ob im Wagen genügend Vorratsluftdruck zum Betätigen der Bremsen vorhanden ist. Die optische Druckanzeige ist dabei meist binär ausgestaltet. So zeigt ein über eine Fensteröffnung sichtbarer Zeiger mit einem roten Feld an, dass nicht genügend Luftdruck zur Verfügung steht, wogegen die Anzeige eines grünen Feldes signalisiert, dass genügend Luftdruck anliegt. Bei einer solchen binären Anzeige sind Zwischenstellungen des Zeigers deshalb nicht zulässig, weil hierdurch eine unklare Information über den Druckzustand erfolgen würde.

Aus diesen Gründen darf der Zeiger bei langsamen Druckänderungen nicht kontinuierlich der Druckänderung folgen, sondern hat bei Erreichen eines den Grenzwert darstellenden Schaltsteuerdrucks p_{S} zügig von einer Stellung in die andere Stellung zu wechseln. Alternativ ist es ausreichend, wenn erkennbar ist, dass sich die Druckanzeige gerade ändert.

Gemäß des allgemein bekannten Standes der Technik wird dieses Erfordernis gewöhnlich durch zusätzliche Stelleinrichtungen erfüllt. So werden bei elektrischen Anzeigevorrichtungen die Druckänderungen kontinuierlich durch einen Drucksensor erfasst, die Anzeige wird jedoch unter Einbindung eines Elektromotors verwirklicht, um hiermit den gefordert zügigen Stellungswechsel des Zeigers der Druckanzeige herbeizuführen.

Nachteilhaft bei diesem Stand der Technik erscheint das Erfordernis der Bereitstellung zusätzlicher Hilfsenergie durch den Elektromotor als Stellantrieb. Des weiteren ist die optische Druckanzeigeeinrichtung auch mit einem elektrischen Anschluss zur Versorgung mit Betriebsenergie auszustatten, was darüber hinaus auch eine entsprechende elektrische Verkabelung erfordert.

Die DE 1 294 046 B offenbart eine optische Druckanzeigeeinrichtung, welche ein Gehäuse umfasst, in das ein Zeiger mit pneumatischen Antriebsmitteln angeordnet ist. Die Ansteuerung des Zeigers und der pneumatischen Antriebsmittel ist hier außerhalb des Gehäuses platziert und besteht in einer recht aufwendigen Ventilschaltungstechnik.

Die DE 23 58 612 A1 offenbart eine strömungsabhängige Überwachungseinrichtung für Schienenfahrzeuge mit einem den Druck in einer Hauptluftleitung steuernden Führerbremsventil. Eine mit einem Zeiger ausgestattete optische Druckanzeigeeinrichtung ist hier nicht vorhanden.

Es ist daher die Aufgabe der vorliegenden Erfindung, eine optische Druckanzeigeeinrichtung zu schaffen, welche ohne eine solche zusätzliche Hilfsenergie auskommt und eine zügige Anzeigeänderung gestattet.

Die Aufgabe wird ausgehend von einer optischen Druckanzeigeeinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zum zügigen Stellungswechsel des Zeigers einer optischen Druckanzeigeeinrichtung ein je in das Gehäuse integrierter Steuerkolben, Ventilfeder und Kolbenschaltventilanordnung vorgesehen ist, die einen mit dem Zeiger mechanisch gekoppelten druckluftbeaufschlagten Stellkolben umfasst, der sich zum analog zügigen Stellungswechsel nach Öffnen eines zugeordneten Belüftungsventils ab Erreichen eines definierten Schaltsteuerdrucks p_{S} bewegt und dabei den Zeiger mitnimmt.

Der Vorteil der erfindungsgemäßen Lösung liegt insbesondere darin, dass der bereits an der optischen Druckanzeigeeinrichtung anliegende Steuerdruck auch als Antriebsmittel für den zügigen Stellungswechsel des Zeigers genutzt werden kann. Hierfür ist lediglich eine Kolbenschaltventilanordnung in die Druckanzeigeeinrichtung zu integrieren, welche nach Art eines Relaisventils wirkt. Außer dem sowieso vorhandenen Steuerdruckanschluss sind keine weiteren äußeren Anschlüsse, insbesondere keine elektrischen Anschlüsse, an der Druckanzeigeeinrichtung erforderlich. Es ist möglich, die erfindungsgemäße optische Druckanzeigeeinrichtung als ein einheitliches Gerät mit der pneumatischen Stelleinheit und der optischen Anzeigeeinheit auszubilden. Daneben ist es jedoch auch denkbar, beide Baueinheiten als separate Geräte auszubilden, die miteinander gekoppelt die optische Druckanzeigeeinrichtung ergeben. Der Schaltsteuerdruck p_{S}, dessen Erreichen den zügigen Stellungswechsel des Zeigers auslöst, ebenfalls durch mechanische Mittel, nämlich durch eine Druckfeder vorgegeben werden, welche als Ventilfeder entgegen der Wirkrichtung des Steuerdrucks p auf einen integrierten Steuerkolben einwirkt. Eine solche den Schaltsteuerdruck p_{S} bestimmende Ventilfeder lässt sich bauraumsparend innerhalb der erfindungsgemäßen Kolbenschaltventilanordnung unterbringen.

Auch der den Zeiger bewegende Stellkolben ist federrückgestellt ausgeführt sein, damit der Zeiger im drucklosen Zustand, also bei nicht anliegendem Steuerandruck p, in eine definierte Ausgangsstellung gelangt. Hierzu wird vorgeschlagen, dass der Stellkolben entgegen der Kraft einer Rückstellfeder mit dem Steuerdruck p beaufschlagbar ist. Auch eine solche Rückstellfeder lässt sich bauraumsparend im Gesamtverbund der erfindungsgemäßen Kolbenschaltventilanordnung unterbringen. Der von der Rückstellfeder eingenommene Kolbenraum sollte mit einer Atmungsbohrung versehen sein, damit hierin Umgebungsdruck herrscht. Hierdurch wird eine falsche Anzeige vermieden.

Die erfindungsgemäße Kolbenschaltventilanordnung kann in zwei bevorzugten Ausführungsformen ausgeführt sein. In einer ersten Ausführungsform ist diese als Doppelsitzventil ausgebildet, wohingegen in einer zweiten Ausführungsform das Prinzip eines Schieberventils genutzt wird.

Gemäß der ersten bevorzugten Ausführungsform ist das Belüftungsventil Bestandteil des Doppelsitzventils, das weiterhin auch ein Entlüftungsventil umfasst, dem ein Ventilteller zugeordnet ist. Der Ventilteller weist vorzugsweise eine zentrale Durchgangsbohrung auf, um einen Entlüftungskanal zu bilden, wogegen der Ventilteller mit seinem äußeren Randbereich mit einem gehäuseseitigen Ventilsitz zur Bildung des Entlüftungsventils zusammenwirkt. Das Entlüftungsventil des Doppelsitzventils verbindet im Druckbereich unterhalb des definierten Schaltsteuerdrucks p_{S} vorzugsweise einen Durchgang zwischen dem Kolben des Zeigers und dem Entlüftungsventil mit einem Entlüftungsanschluss, der zur Atmosphäre führt. Durch diese Maßnahme wird ebenfalls verhindert, dass eventueller Leckagedruck im Ausgangszustand der optischen Druckanzeigeeinrichtung strömend eine Betätigung des Zeigers auslösen könnte, um somit das Anzeigeergebnis zu verfälschen.

Hinsichtlich der zweiten Ausführungsform der Kolbenschaltventilanordnung nach dem Schieberprinzip wird vorgeschlagen, dass das Belüftungsventil vorzugsweise von einem mit dem Steuerdruck p_{S} stirnseitig beaufschlagten Steuerschieber schaltbar ist. Der Steuerschieber kann dann als ein zylindrischer Körper ausgebildet sein, der vorzugsweise an seinem Außenumfang zwei axial zueinander beabstandete Dichtringe trägt. Während der erste Dichtring mit einem integrieren Belüftungsventil zusammenwirkt, wirkt der andere Dichtring mit einem ebenfalls integrierten Entlüftungsventil zusammen. Neben diesem außendichtenden Dichtkonzept des Steuerschiebers ist alternativ auch ein innendichtendes Dichtkonzept möglich.

Neben der Funktion des Steuerschiebers zur Betätigung des Belüftungsventils betätigt dieser vorzugsweise weiterhin auch ein Entlüftungsventil, um im Druckbereich unterhalb des definierten Schaltsteuerdrucks p_{S} einen Durchgang zwischen dem Kolben und dem Entlüftungsventil mit einem Entlüftungsanschluss zu verbinden. Dies erfolgt zu dem selben Zweck, wie vorstehend im Zusammenhang mit dem Doppelsitzventil erläutert wurde.

Gemäß einer weiteren die Erfindung verbessernden Maßnahme wird vorgeschlagen, dass der Durchgang dabei zumindest teilweise durch den Steuerschieber verläuft, vorzugsweise in U-Form, um eine einfache ventilinterne Kanalführung zu erzielen.

Gemäß einer weiteren die Erfindung verbessernden Maßnahme wird vorgeschlagen, dass die mechanische Kopplung des Zeigers am Kolben über eine vom Kolben ausgehende Kolbenstange erfolgt, an deren Endseite ein winkelförmiges Zeigerelement angebracht ist, das über eine Fensteröffnung im Gehäuse sichtbar ist. Somit beschreibt die Kolbenstange im Zusammenwirken mit dem winkelförmigen Zeigerelement eine U-Form und lässt sich infolgedessen bauraumsparend innerhalb eines die optische Druckanzeigeeinrichtung umgebenden Gehäuses mit der Fensteröffnung unterbringen.

Weitere die Erfindung verbessernde Maßnahmen werden nachstehend gemeinsam mit der Beschreibung der beiden Ausführungsformen der Erfindung anhand der Zeichnung näher dargestellt. Es zeigt:
- Fig. 1: eine schematische Seitenansicht einer optischen Druckanzeigeeinrichtung mit einem integrierten Doppelsitzventil gemäß der ersten Ausführungsform, und
- Fig. 2: eine schematische Seitenansicht einer optischen Druckanzeigeeinrichtung mit einem integrierten Schieberventil gemäß der zweiten Ausführungsform.

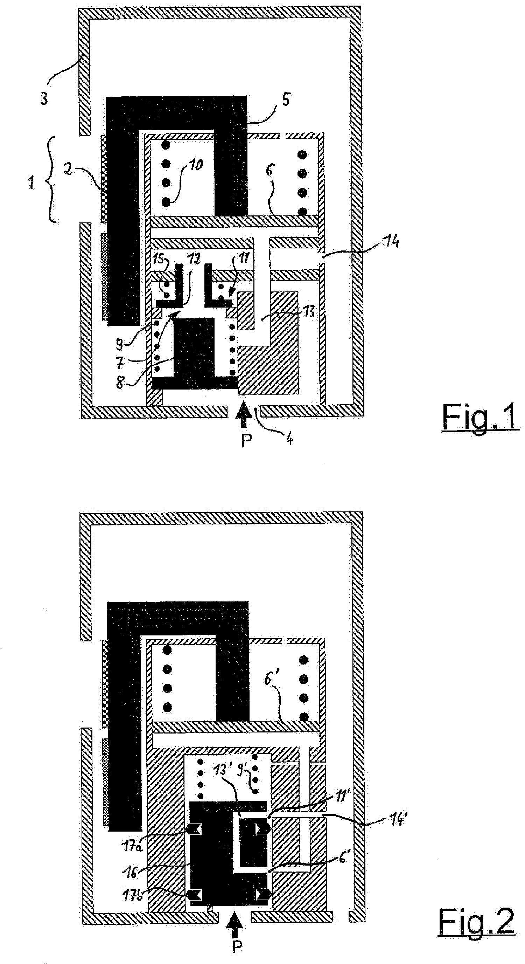

Gemäß Fig. 1 weist die Druckanzeigeeinrichtung einen entlang eines Anzeigeweges 1 bewegbaren Zeiger 2 auf, wobei der Anzeigeweg 1 durch eine Fensteröffnung in einem die Druckanzeigeeinrichtung umgebenden Gehäuse 3 definiert ist.

Zum zügigen Stellungswechsel des Zeigers 2 ist eine Kolbenschaltventilanordnung vorgesehen, die über einen am Gehäuse 3 angeordneten Druckanschluss 4 per Steuerdruck p betätigt wird. Mit dem Zeiger 2 ist über eine zwischengeschaltete Kolbenstange 5 ein Stellkolben 6 verbunden, welcher einen Stellungswechsel des Zeigers 2 durch Druckbeaufschlagung über ein zugeordnetes Belüftungsventil 7 ab Erreichen eines Schaltsteuerdrucks p_{S} ausführt.

Der Schaltsteuerdruck p_{S} wird durch eine auf einen Steuerkolben 8 wirkende Ventilfeder 9 definiert. Die Ventilfeder 9 wirkt dabei entgegen der Wirkungsrichtung des Steuerdrucks p auf den Steuerkolben 8.

Der Stellkolben 6 ist entgegen der Kraft einer Rückstellfeder 10 druckbeaufschlagbar, und zwar durch den Steuerdruck p.

Dem Belüftungsventil 7 ist im Rahmen eines Doppelsitzventils ein Entlüftungsventil 11 beigeordnet. Das Entlüftungsventil 11 umfasst einen Ventilteller 12 mit zentralem Durchgang, der über einen gehäuseseitigen Durchgang 13 den dem Stellkolben 6 zugeordneten Druckraum mit einem Entlüftungsanschluss 14 verbindet.

Liegt kein Steuerdruck p am Druckanschluss 4 an, so drückt die Ventilfeder 9 den Steuerkolben 8 gegen einen gehäuseseitigen Anschlag, der die Ausgangsposition definiert. Der Ventilteller 12 wird in dieser Ausgangsposition durch eine zugeordnete Druckfeder 15 in die Schließstellung des Belüftungsventils 12 gedrückt. Der Durchgang 13 zwischen dem Stellkolben 6 und dem Entlüftungsanschluss 14 ist geöffnet.

Bei steigendem Steuerdruck p am Druckanschluss 4 bewegt sich der Steuerkolben 8 gegen die Ventilfeder 9 und wird schließlich gegen den Ventilteller 12 gedrückt. Hierdurch schließt sich das Entlüftungsventil 12 und der Durchgang zwischen dem Stellkolben 6 und dem Entlüftungsanschluss 14 ist unterbrochen. Übersteigt die durch den Steuerdruck p erzeugte Kraft die Kraft der Druckfeder 15, so wird der Ventilteller 12 derart verschoben, dass sich das Belüftungsventil 7 öffnet. Hierdurch öffnet sich eine Verbindung zwischen dem Stellkolben 6 und dem Steuerdruck p, so dass sich der Stellkolben 6 zum zügigen Stellungswechsel des Zeigers 2 bewegt.

Nach der in Fig. 2 dargestellten zweiten Ausführungsform ist ein Belüftungsventil 6' von einem Steuerschieber 16 schaltbar, der stirnseitig mit dem Steuerdruck p beaufschlagbar ist. Der Steuerschieber 16 betätigt weiterhin auch ein Entlüftungsventil 11', um im Druckbereich unterhalb des definierten Schaltsteuerdrucks p_{S} einen Durchgang 13' zwischen dem Stellkolben 6' und dem Entlüftungsventil 11' mit einem Entlüftungsanschluss 14 zu verbinden. Es verläuft der Durchgang 13' hier teilweise auch durch den Steuerschieber 16.

Der Steuerschieber 16 ist außerdem mit zwei axial zueinander beabstandeten Dichtringen 17a und 17b versehen, wobei der obenliegende Dichtring 17a mit dem Entlüftungsventil 11' und der untenliegende Dichtring 17b mit dem Belüftungsventil 6' zusammenwirkt.

Der weitere Aufbau der zweiten Ausführungsform sowie die Funktionsweise der Kolbenschaltventilanordnung sind analog zu der vorstehend beschriebenen ersten Ausführungsform.

### Bezugszeichenliste

- 1: Anzeigeweg
- 2: Zeiger
- 3: Gehäuse
- 4: Druckanschluss
- 5: Kolbenstange
- 6: Stellkolben
- 7: Belüftungsventil
- 8: Steuerkolben
- 9: Ventilfeder
- 10: Rückstellfeder
- 11: Entlüftungsventil
- 12: Ventilteller
- 13: Durchgang
- 14: Entlüftungsanschluss
- 15: Druckfeder
- 16: Steuerschieber
- 17: Dichtring

## Patentansprüche

1. Optische Druckanzeigeeinrichtung mit einem Gehäuse (3), enthaltend einen mechanisch entlang eines Anzeigeweges (1) bewegbaren Zeiger (2), der nach Maßgabe eines über einen Druckanschluss (4) des Gehäuses (3) anliegenden Steuerdrucks (p) zur Absolutdruckanzeige derart verstellbar ist, dass eine langsame Druckänderung einen zumindest abschnittsweise zügigen Stellungswechsel des Zeigers (2) herbeiführt,
**dadurch gekennzeichnet, dass** zum zügigen Stellungswechsel des Zeigers (2) ein in das Gehäuse (3) integrierter Steuerkolben (8), eine in das Gehäuse (3) integrierte Ventilfeder (9; 9') und eine in das Gehäuse (3) integrierte Kolbenschaltventilanordnung vorgesehen ist, die einen mit dem Zeiger (2) mechanisch gekoppelten Stellkolben (6) aufweist, der sich zum analog zügigen Stellungswechsel nach Öffnen eines zugeordneten Belüftungsventils (7) ab Erreichen eines definierten Schaltsteuerdrucks (p_{S}) bewegt, welcher durch die auf den Steuerkolben (8) entgegen der durch den Steuerdruck (p) ausgeübten Kraft wirkende Ventilfeder (9; 9') definiert ist.

2. Optische Druckanzeigeeinrichtung nach Anspruch 1,
**dadurch gekennzeichnet, dass** der Stellkolben (6) entgegen der Kraft einer Rückstellfeder (10) mit dem Steuerdruck (p) beaufschlagbar ist.

3. Optische Druckanzeigeeinrichtung nach Anspruch 1,
**dadurch gekennzeichnet, dass** das Belüftungsventil (7) Bestandteil eines Doppelsitzventils ist, das weiterhin auch ein Entlüftungsventil (11) umfasst, dem ein Ventilteller (12) zugeordnet ist.

4. Optische Druckanzeigeeinrichtung nach Anspruch 3,
**dadurch gekennzeichnet, dass** das Entlüftungsventil (11) im Druckbereich unterhalb des definierten Schaltsteuerdrucks (p_{S}) einen Durchgang (13) zwischen dem Stellkolben (6) und dem Entlüftungsventil (11) mit einem Entlüftungsanschluss (14) verbindet.

5. Optische Druckanzeigeeinrichtung nach Anspruch 1,
**dadurch gekennzeichnet, dass** das Belüftungsventil (6') von einem mit dem Steuerdruck (p) stirnseitig beaufschlagten Steuerschieber (16) schaltbar ist.

6. Optische Druckanzeigeeinrichtung nach Anspruch 5,
**dadurch gekennzeichnet, dass** der Steuerschieber (16) weiterhin auch ein Entlüftungsventil (11') betätigt, um im Druckbereich unterhalb des definierten Schaltsteuerdrucks (p_{S}) einen Durchgang (13') zwischen dem Stellkolben (6') und dem Entlüftungsventil (11') mit einem Entlüftungsanschluss (14') zu verbinden.

7. Optische Druckanzeigeeinrichtung nach Anspruch 5,
**dadurch gekennzeichnet, dass** der Durchgang (13') teilweise durch den Steuerschieber (16) verläuft.

8. Optische Druckanzeigeeinrichtung nach Anspruch 5,
**dadurch gekennzeichnet, dass** der Steuerschieber (16) mit zwei axial zueinander beabstandeten Dichtringen (17a, 17b) versehen ist, wobei der eine Dichtring (17a) mit dem Entlüftungsventil (11') und der andere Dichtring (17b) mit der Belüftungsventil (6') zusammenwirkt.

9. Optische Druckanzeigeeinrichtung nach einem der vorstehenden Ansprüche,
**dadurch gekennzeichnet, dass** die mechanische Kopplung des Zeigers (2) am Kolben (6) über eine Kolbenstange (5) erfolgt, an der ein winkelförmiges Zeigerelement angebracht ist, das über eine dem Anzeigeweg (1) des Zeigers (2) entsprechende Fensteröffnung im Gehäuse (3) sichtbar ist.

## Claims

1. Optical pressure indicating device, comprising a housing (3) containing a pointer (2), which is movable mechanically along an indicating path (3) and which can be adjusted for absolute pressure indication in accordance with a control pressure (p) applied via a pressure port (4) of the housing (3) in such a way that a slow pressure change causes a rapid change of the position of the pointer (2) at least in some sections,
**characterised in that,** for a rapid change of the position of the pointer (2), a control piston (8) integrated into the housing (3), a valve spring (9; 9') integrated into the housing (3) and a piston switching valve assembly integrated into the housing (3) are provided, the piston switching valve assembly comprising a control piston (6), which is mechanically coupled to the pointer (2) and which, for an analogously rapid change of position, moves following the opening of an associated ventilation valve (7) on reaching a defined switching control pressure (ps), which is defined by the valve spring (9; 9') acting on the control piston (8) against the force applied by the control pressure (p).

2. Optical pressure indicating device according to claim 1,
**characterised in that** the control pressure (p) can be applied to the control piston (8) against the force of a return spring (10).

3. Optical pressure indicating device according to claim 1,
**characterised in that** the ventilation valve (7) is a part of a double-seat valve which also includes a venting valve (11), to which a valve disc (12) is assigned.

4. Optical pressure indicating device according to claim 3,
**characterised in that** the venting valve (11) connects in the pressure range below the defined switching control pressure (ps) a passage (13) between the control piston (8) and the venting valve (11) to a venting port (14).

5. Optical pressure indicating device according to claim 1,
**characterised in that** the ventilation valve (6') can be switched by a control slide valve (16), to the end face of which the control pressure (p) is applied.

6. Optical pressure indicating device according to claim 5,
**characterised in that** the control slide valve (16) further actuates a venting valve (11') in order to connect in the pressure range below the defined switching control pressure (ps) a passage (13') between the control piston (6') and the venting valve (11') to a venting port (14').

7. Optical pressure indicating device according to claim 5,
**characterised in that** the passage (13') partially extends through the control slide valve (16).

8. Optical pressure indicating device according to claim 5,
**characterised in that** the control slide valve (16) is provided with two axially spaced sealing rings (17a, 17b), the one sealing ring (17a) acting together with the venting valve (11') and the other sealing ring (17b) acting together with the ventilation valve (6').

9. Optical pressure indicating device according to any of the preceding claims,
**characterised in that** the pointer (2) is mechanically coupled to the piston (6) via a piston rod (5), on which is mounted an angular pointer element visible through a window opening in the housing which corresponds to the indicating path (1) of the pointer (2).

## Revendications

1. Dispositif optique d'indication de la pression, comprenant un boîtier (3), contenant un indicateur (2), qui et mobile mécaniquement le long d'un trajet (1) d'indication et qui, pour l'indication d'une pression absolue, peut être déplacé en fonction d'une pression (p) de commande s'appliquant par un raccord (4) de pression du boîtier (3), de manière à ce qu'une variation lente de la pression provoque un changement de position rapide, au moins par tronçon, de l'indicateur (2), **caractérisé en ce que**, pour le changement de position rapide de l'indicateur (2), il y a un piston (8) de commande intégré dans le boîtier (3), un ressort (9 ; 9') de soupape intégré dans le boîtier (3) et un agencement de soupape de manoeuvre à piston intégré dans le boîtier (3) et ayant un piston (6) de réglage accouplé mécaniquement à l'indicateur (2), qui, pour le changement rapide de manière analogue de position, se déplace, après l'ouverture d'une soupape (7) d'alimentation en air associée, dès qu'est atteinte une pression (p_{S}) de commande de manoeuvre définie, qui est définie par le ressort (9, 9') de soupape agissant sur le piston (8) de commande, à l'encontre de la force appliquée par la pression (p) de commande.

2. Dispositif optique d'indication de la pression suivant la revendication 1,
**caractérisé en ce que** le piston (6) de réglage peut être soumis à la pression (p) de commande à l'encontre de la force d'un ressort (10) de rappel.

3. Dispositif optique d'indication de la pression suivant la revendication 1,
**caractérisé en ce que** la soupape (7) d'alimentation en air fait partie d'une soupape à deux sièges, qui comprend en outre également une soupape (11) de purge, à laquelle est associée une tête (12) de soupape.

4. Dispositif optique d'indication de la pression suivant la revendication 3,
**caractérisé en ce que** la soupape (11) de purge met, dans la plage de pression en dessous de la pression (p_{S}) de commande de manoeuvre définie, un passage (13) entre le piston (6) de réglage et la soupape (11) de purge en communication avec un raccord (14) de purge.

5. Dispositif optique d'indication de la pression suivant la revendication 1,
**caractérisé en ce que** la soupape (6') d'alimentation en air peut être manoeuvrée par un tiroir (16) de commande soumis du côté frontal à la pression (p) de commande.

6. Dispositif optique d'indication de la pression suivant la revendication 5,
**caractérisé en ce que** le tiroir (16) de commande actionne en outre également une soupape (11') de purge afin de mettre, dans la plage de pression en dessous de la pression (p_{S}) de commande de manoeuvre définie, un passage (13'), entre le piston (6') de réglage et la soupape (11') de purge en communication avec un raccord (14') de purge.

7. Dispositif optique d'indication de la pression suivant la revendication 5,
**caractérisé en ce que** le passage (13') s'étend en partie dans le tiroir (16) de commande.

8. Dispositif optique d'indication de la pression suivant la revendication 5,
**caractérisé en ce que** le tiroir (16) de commande est pourvu de deux joints (17a, 17b), à distance axialement l'un de l'autre, l'un des joints (17a) coopérant avec la soupape (11') de purge et l'autre joint (17b) avec la soupape (6') d'alimentation en air.

9. Dispositif optique d'indication de la pression suivant l'une des revendications précédentes,
**caractérisé en ce que** l'accouplement mécanique de l'indicateur (12) au piston (6) s'effectue par une tige (5) de piston sur laquelle est mis un élément indicateur en forme d'équerre, qui est visible par un hublot du boîtier (3), en correspondance avec le trajet (1) d'indication de l'indicateur (2).
